# EUROPÄISCHE PATENTSCHRIFT

(11) **EP 2 993 068 B1**
(45) Veröffentlichungstag und Bekanntmachung des Hinweises auf die Patenterteilung: **22.02.2017**
(21) Anmeldenummer: 15182680.7
(22) Anmeldetag: 27.08.2015
(51) Int. Cl.: B60H 1/34, F24F 13/15

(54) **LUFTAUSSTRÖMER MIT MEHRTEILIG AUSGEBILDETEN LUFTLEITELEMENTEN**
AIR DUCTS WITH AIR GUIDE ELEMENTS IN SEVERAL PARTS
DISPOSITIF D'ECOULEMENT D'AIR AYANT DES ELEMENTS DE GUIDAGE D'AIR FORMES EN PLUSIEURS PARTIES

(30) Priorität: 08.09.2014 DE 202014104226 U
(43) Veröffentlichungstag der Anmeldung: 09.03.2016
(73) Patentinhaber: Dr. Schneider Kunststoffwerke GmbH, 96317 Kronach (DE)
(72) Erfinder: Matrane, Kamal, 44141 Dortmund (DE); Grüdl, Alexander, 96317 Kronach (DE); Uhlenbusch, Olaf, 96275 Marktzeuln (DE)
(74) Vertreter: Sperschneider, Alexandra

(56) Entgegenhaltungen:
- EP-A1- 1 810 857
- WO-A1-2013/054594
- DE-A1- 19 943 822
- DE-A1-102006 032 587
- JP-A- S60 169 044
- JP-A- 2006 306 365

## Beschreibung

Die vorliegende Erfindung betrifft einen Luftausströmer, aufweisend mindestens zwei im Wesentlichen parallel zueinander angeordnete Luftleitelemente, rechtwinklig zu den Luftleitelementen angeordnete, verschwenkbare Lamellen und ein Gehäuse mit einem Lufteintrittsbereich, einem Luftaustrittsbereich und einem zwischen dem Lufteintrittsbereich und dem Luftaustrittsbereich angeordneten Luftkanal.

Derartige Luftleitelemente können beispielsweise in Luftausströmern für Kraftfahrzeuge verwendet werden.

Ein derartiger Luftausströmer ist beispielsweise aus JP 2006 306365 A bekannt.

Allgemein dienen Luftleitelemente zum Steuern der ausströmenden Luft in horizontaler und/oder vertikaler Richtung.

In der Regel werden horizontal und vertikal ausgerichtete Luftleitelemente oder Lamellen hintereinander angeordnet. Über einen Verstellmechanismus können dann sowohl die horizontal verlaufenden Lamellen als auch die vertikal verlaufenden Lamellen getrennt voneinander und zusammen verschwenkt werden, um die Richtung der ausströmenden Luft einzustellen.

Probleme ergeben sich bei der Ausgestaltung von konventionellen Luftausströmern mit derartig angeordneten Lamellen im Hinblick auf Druckverluste und störende Geräusche. Durch die verschiedenen Stellungen der Lamellen kommt es zu Änderungen des Strömungsquerschnitts des Luftkanals. Darüber hinaus gibt es bei Luftausströmern mit derartig angeordneten Lamellen eine Vielzahl von Abrisskanten für die durchströmende Luft, was zu störenden Geräuschen führt.

Aus dem Stand der Technik ist es bisher bekannt, störende Geräusche durch spezielle Beschichtungen an Lamellen zu unterdrücken oder schallabsorbierende Elemente insbesondere an den Kanten der Lamellen anzuordnen.

Jedoch wird bei solchen Lösungen kein Ausgleich eines Druckverlustes erreicht. Zudem ist es umständlich und fertigungstechnisch aufwändiger, was ebenso zu erhöhten Kosten führt, die Lamellen entsprechend zu beschichten oder mit weiteren Elementen zu versehen.

Aufgabe der vorliegenden Erfindung ist es daher, einen Luftausströmer anzugeben, der unabhängig von der Stellung der Lamellen bzw. Luftleitelemente unwesentliche Druckverluste bereitstellt und keine oder nur geringe Geräusche verursacht. Zudem sollen keine Beeinträchtigungen bei der Luftablenkung entstehen.

Erfindungsgemäß wird die Aufgabe durch einen Luftausströmer mit den im Anspruch 1 angegebenen technischen Merkmalen gelöst. Vorteilhafte Weiterbildungen der Erfindung sind in den Unteransprüchen im Detail angegeben.

Bei einem erfindungsgemäßen Luftausströmer, aufweisend mindestens zwei im Wesentlichen parallel zueinander angeordnete Luftleitelemente, rechtwinklig zu den Luftleitelementen angeordnete verschwenkbare Lamellen und einem Gehäuse mit einem Lufteintrittsbereich, einem Luftaustrittsbereich und einem zwischen dem Lufteintrittsbereich und dem Luftaustrittsbereich angeordneten Luftkanal, weisen die mindestens zwei Luftleitelemente einen ersten Abschnitt, einen zweiten Abschnitt und einen dritten Abschnitt auf und die Abschnitte sind miteinander verschwenkbar verbunden, wobei die ersten Abschnitte der mindestens zwei Luftleitelemente im Luftaustrittsbereich mindestens verschwenkbar mit dem Gehäuse verbunden sind und die dritten Abschnitte im Luftkanal verschwenkbar und verlagerbar mit dem Gehäuse verbunden sind und die Lamellen zwischen den zweiten Abschnitten angeordnet sind.

Bei dem Luftausströmer sind die Lamellen je zwischen zweit Abschnitten angeordnet. Ihren Abstand definiert der Strömungsquerschnitt der durchströmenden Luft und bleibt auch bei der Verstellung im Wesentlichen gleich. Hierdurch werden Druckverluste, die in Extremstellungen bei Luftausströmern aus dem Stand der Technik ein relativ großes Ausmaß annehmen können, vermieden. Darüber hinaus werden ferner störende Geräusche vermieden oder zumindest reduziert, da insbesondere bei einer entsprechenden Ausbildung des Gehäuses, wobei die dem Lufteintrittsbereich zugewandten Längskanten der Luftleitelemente, die dem Gehäuse zugewandt sind, mit diesem im Wesentlichen fluchten und die Längskanten der ersten Abschnitte, die dem Luftaustrittsbereich zugewandt sind und ebenfalls mit entsprechenden Bereichen des Gehäuses fluchten, eine optimale Strömung der Luft sicherstellen. Die ersten Abschnitte sind verschwenkbar mit dem Gehäuse verbunden und die dritten Abschnitte im Luftkanal verschwenkbar und verlagerbar mit dem Gehäuse verbunden, so dass bei einem Verschwenken der ersten Abschnitte die zweiten und dritten Abschnitte eine entsprechende Bewegung ausführen, wobei die zweiten und dritten Abschnitte hierbei zusätzlich verlagert werden können. Die Winkelverstellung des ersten und des dritten Abschnittes gegenüber dem mittigen zweiten Abschnitt erfolgt durch relative Höhenverstellung der zweiten Abschnitte gegenüber den seitlichen ersten und dritten Abschnitten. Wenn der erste Abschnitt fest im Gehäuse schwenkbeweglich gelagert ist, bewirkt die Höhenverstellung des zweiten Abschnittes automatisch auch eine Verschiebung in Strömungslängsrichtung der durchtretenden Luft. Dies kann vermieden werden, indem das Schwenklager des ersten Abschnittes im Gehäuse gemäß dem des dritten Abschnittes verlagerbar angeordnet ist, z. B. die Schwenkachse in eine Langlochführung eingelegt ist. Dadurch wird es möglich, die zweiten Abschnitte in Parallelführungen quer zur Strömungsrichtung im Gehäuse manuell oder motorisch angetrieben zu verstellen, wodurch die Winkelstellungen der ersten und dritten Abschnitte in gewünschter Weise verändert werden.

Der Strömungsquerschnitt des Luftkanals ändert sich natürlich bei einem Verschwenken der Lamellen. Jedoch ist eine solche Änderung gewünscht und bewirkt keine Druckverluste, die sich ergeben, wenn rechtwinklig zu den Lamellen angeordnete Luftleitelemente in den Luftkanal hineinragen ohne einen entsprechenden Ausgleich bereitzustellen. Anders formuliert, bleibt der Abstand der ersten, der zweiten und der dritten Abschnitte der Luftleitelemente bei dem erfindungsgemäßen Luftausströmer unabhängig vom Grad des Verschwenkens gleich.

Die dritten Abschnitte können Lagerelemente aufweisen, die in Führungskulissen an gegenüberliegenden Seitenwänden des Gehäuses im Luftkanal beweglich gelagert sind. Die Führungskulissen geben hierbei insoweit auch vor, inwieweit die dritten Abschnitte verschwenkt und verlagert werden können.

Die Lamellen zwischen den zweiten Abschnitten können über eine Koppeleinrichtung miteinander verbunden sein, so dass bei einem Verschwenken einer Lamelle auch die weiteren Lamellen eine entsprechende Bewegung durchführen.

Die den ersten Abschnitten, den zweiten Abschnitten und den dritten Abschnitten zugewandten Seitenwände des Gehäuses können Bereiche aufweisen, die so ausgebildet sind, dass die ersten Abschnitte, die zweiten Abschnitte und die dritten Abschnitte in ihren maximalen Schwenkstellungen parallel zu den Bereichen der Seitenwände verlaufen. Diese Seitenwände begrenzen somit das Maß, um welches die ersten Abschnitte, die zweiten Abschnitte und die dritten Abschnitte verschwenkt werden können.

Die zweiten Abschnitte können an gegenüberliegenden Seitenwänden des Gehäuses im Luftkanal geführt sein. Die zweiten Abschnitte der Luftleitelemente verlaufen in sämtlichen Stellungen der Luftleitelemente parallel zueinander. Die parallele Anordnung der zweiten Abschnitte kann beispielsweise über Führungen an den gegenüberliegenden Seitenwänden und die zweiten Abschnitte miteinander verbindende Führungsteile, wie z. B. eine Führungsplatte, erfolgen.

Die zweiten Abschnitte der Luftleitelemente können miteinander verbunden sein. Die Verbindung kann hierbei, wie vorstehend angeführt, beispielsweise über eine Führungsplatte erfolgen. In einer derartigen Ausführungsform weisen die zweiten Abschnitte an den Seiten, die den Seitenwänden zugewandt und der Führungsplatte zugewandt sind, längliche Öffnungen auf, in welchen Stifte verschieblich gelagert sind, die wiederum fest mit der Führungsplatte verbunden sind. Die verschiebliche Lagerung gleicht eine Verlagerung der zweiten Abschnitte im Luftkanal bei einem Verschwenken der ersten Abschnitte aus.

Die ersten Abschnitte können mit den zweiten Abschnitten und die zweiten Abschnitte mit den dritten Abschnitten über Scharniere miteinander verbunden sein. Beispielsweise verlaufen in den Verbindungsbereichen der ersten Abschnitte mit den zweiten Abschnitten und der zweiten Abschnitte mit den dritten Abschnitte dünne Stäbe oder Stangen, die teilweise mit den Abschnitten verbunden sind oder die Abschnitte sind in diesen Verbindungsbereichen so ausgebildet, dass beispielsweise Stifte eines Abschnitts in Öffnungen des damit verbundenen Abschnitts eingreifen.

Die ersten Abschnitte der Luftleitelemente können an ihrer dem Luftaustrittsbereich zugewandten Längskante verschwenkbar mit dem Gehäuse verbunden sein. Es ist zwar auch möglich, die Schwenkachse der ersten Abschnitte beabstandet zu den dem Luftaustrittsbereich zugewandten Längskanten anzuordnen, jedoch ergibt sich bei Schwenkachsen, die im Bereich der dem Luftaustrittsbereich zugewandten Längskanten verlaufen, eine Eliminierung oder zumindest eine Reduzierung von Störungsgeräuschen, da keine vordere Luftabrisskante gebildet wird, die entlang des Luftaustrittsbereichs verlagert wird.

Die dem Lufteintrittsbereich und/oder dem Luftaustrittsbereich zugewandten Längskanten der Luftleitelemente, insbesondere der ersten Abschnitte und der zweiten Abschnitte, können abgerundet ausgebildet sein. Dadurch werden Geräusche minimiert oder eliminiert und eine verbesserte Durchströmung erreicht.

Das Gehäuse des Luftausströmers kann eine den Luftaustrittsbereich umgebende Blende aufweisen. Die dem Luftaustrittsbereich zugewandten Längskanten der ersten Abschnitte der Luftleitelemente können hinter einer Luftaustrittskante einer Blende und/oder des Luftaustrittsbereichs angeordnet sein. Der Strömungsquerschnitt bleibt hierbei auch im Luftaustrittsbereich im Wesentlichen gleich dem Strömungsquerschnitt des Luftkanals. Insbesondere werden hierbei keine scharfen Luftabrisskanten durch die ersten Abschnitte gebildet.

Die Luftaustrittskante einer Blende und/oder des Luftaustrittsbereichs können abgerundet ausgebildet sein, so dass keine scharfkantigen Luftaustrittskanten gebildet werden, welche vermehrt zu Geräuschen führen und den Luftstrom der ausströmenden Luft ungewollt ablenken.

Der Luftausströmer kann mindestens drei Luftleitelemente aufweisen und zwischen den zweiten Abschnitten der Luftleitelemente kann jeweils eine Gruppe von Lamellen angeordnet sein, wobei die Lamellen der jeweiligen Gruppe und die Gruppen der Lamellen miteinander gekoppelt sind.

Ferner kann der Luftausströmer mindestens drei Luftleitelemente aufweisen und in dem mindestens einen mittleren zweiten Abschnitt kann eine Koppelstange mit Öffnungen aufgenommen sein, wobei in den Öffnungen Koppelstifte zum Koppeln der über und unter des mindestens einen zweiten Abschnittes angeordneten Lamellen gelagert sind, wobei der mindestens eine zweite Abschnitt korrespondierende Öffnungen für die Koppelstifte aufweist. Die Koppelstange liegt hierbei nicht im Strömungskanal und führt dadurch nicht zu Verwirbelungen oder einer anderen Beeinflussung (z. B. störende Geräusche) der durchströmenden Luft. Auch die Koppelstifte liegen nicht im Strömungskanal.

Das Gehäuse kann einen im Wesentlichen rechteckigen Querschnitt aufweisen und die ersten Abschnitte, die zweiten Abschnitte und die dritten Abschnitte der Luftleitelemente können ebenso im Wesentlichen rechteckig ausgebildet sein. Es ist jedoch auch möglich, andere Querschnittsformen zu wählen, wobei die entsprechenden Komponenten des Luftausströmers daran angepasst werden müssen.

An dem ersten Abschnitt eines Luftleitelementes kann an der dem Luftaustrittsbereich zugewandten Längskante ein Verstellmittel angeordnet sein, welches parallel zur Längskante verschieblich gelagert mit mindestens einer Lamelle gekoppelt ist. Das Verstellmittel dient zum Verschwenken der Lamellen und zum Verschwenken des ersten Abschnitts der Luftleitelemente, wobei zusätzlich eine Verlagerung der zweiten Abschnitte und der dritten Abschnitte der Luftleitelemente erfolgt. Ferner sind die Luftleitelemente über die zweiten Abschnitte miteinander gekoppelt, so dass eine entsprechende Verlagerung erfolgt.

Ein erstes Verschiebeteil kann einen Koppelstift innerhalb des zweiten Abschnitts mindestens abschnittsweise umgreifen, wobei das erste Verschiebeteil mit dem Verstellmittel verbunden ist.

Das erste Verschiebeteil kann entlang einer Stange verschieblich gelagert sein, welche Stange Teil eines Scharniers zwischen dem zweiten Abschnitt und dem ersten Abschnitt mit dem Verstellmittel ist, wobei das erste Verschiebeteil mit einem zweiten Verschiebeteil gekoppelt ist, welches innerhalb des ersten Abschnitts mit dem Verstellmittel geführt und mit dem Verstellmittel verbunden ist. Der erste Abschnitt mit dem Verstellmittel weist hierbei Freiräume innerhalb des ersten Abschnitts auf, die zur Aufnahme des zweiten Verschiebeteils dienen. Über eine solche Ausgestaltung sind die Bestandteile zum Verschwenken, insbesondere der Lamellen, nicht in dem Luftströmungskanal angeordnet und beeinflussen die durchströmende Luft nicht.

Die Luftleitelemente können mindestens einen vierten Abschnitt aufweisen, der zwischen dem zweiten und dem dritten Abschnitt verschwenkbar mit diesen verbunden ist. Es ist bei der Erfindung in weiteren Ausführungen vorgesehen, die Anzahl der verschwenkbaren Abschnitte an die gewünschten Eigenschaften des Luftausströmers anzupassen.

Der mindestens eine vierte Abschnitt kann hierbei ebenso in dem Gehäuse geführt und/oder verschwenkbar gelagert sein.

Derartige Luftausströmer eignen sich beispielsweise zur Verwendung in Kraftfahrzeugen. Die Komponenten des Luftausströmers können größtenteils oder vollständig aus Kunststoff, beispielsweise in einem Spritzgussverfahren, hergestellt sein. Anstelle eines Verstellmittels, welches verschieblich entlang eines ersten Abschnitts angeordnet ist, ist auch eine Verstellung über weitere Einrichtungen möglich, beispielsweise über einen Joystick. Der Joystick kann beispielsweise mittig im Luftausströmschacht angeordnet oder aber auch seitlich vom Luftausströmschacht bzw. an einem anderen Ort außerhalb des Luftausströmschachts angeordnet sein.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Vorderansicht auf einen Luftausströmer in einer Neutralstellung;
- Fig. 2: eine Seitenansicht des Luftausströmers von Fig. 1;
- Fig. 3: einen Schnitt durch den Luftausströmers von Fig. 1 (A-A);
- Fig. 4: einen weiteren Schnitt durch den Luftausströmer von Fig. 1 (B-B);
- Fig. 5: eine perspektivische Darstellung von Komponenten des Luftausströmers von Fig. 1 in schematischer Ansicht;
- Fig. 6: weitere perspektivische Darstellungen von Komponenten des Luftausströmers von Fig. 1 in schematischer Ansicht;
- Fig. 7: eine schematische Vorderansicht auf den Luftausströmer von Fig. 1 in einer verschwenkten Stellung;
- Fig. 8: eine Seitenansicht des Luftausströmers von Fig. 7;
- Fig. 9: einen Schnitt durch den Luftausströmer von Fig. 7 (A-A);
- Fig. 10: einen weiteren Schnitt durch den Luftausströmer von Fig. 7 (B-B);
- Fig. 11: eine perspektivische Darstellung von Komponenten des Luftausströmers von Fig. 7 in schematischer Ansicht;
- Fig. 12: weitere perspektivische Darstellungen von Komponenten des Luftausströmers von Fig. 7 in schematischer Ansicht;
- Fig. 13: eine schematische Vorderansicht auf den Luftausströmer von Fig. 1 in einer weiteren verschwenkten Stellung;
- Fig. 14: eine Seitenansicht des Luftausströmers von Fig. 13;
- Fig. 15: einen Schnitt durch den Luftausströmer von Fig. 13 (A-A);
- Fig. 16: einen weiteren Schritt durch den Luftausströmer von Fig. 13 (B-B);
- Fig. 17: eine perspektivische Darstellung von Komponenten des Luftausströmers von Fig. 13 in schematischer Darstellung; und
- Fig. 18: weitere perspektivische Darstellungen von Komponenten des Luftausströmers von Fig. 13 in schematischer Ansicht.

In den Figuren mit gleichen Bezugszeichen versehene Teile und Komponenten entsprechen im Wesentlichen einander, solange nichts anderes angegeben ist. Ferner wird darauf verzichtet, Komponenten und Bestandteile zu beschreiben, welche nicht wesentlich für das Verständnis der hierin offenbarten technischen Lehre sind.

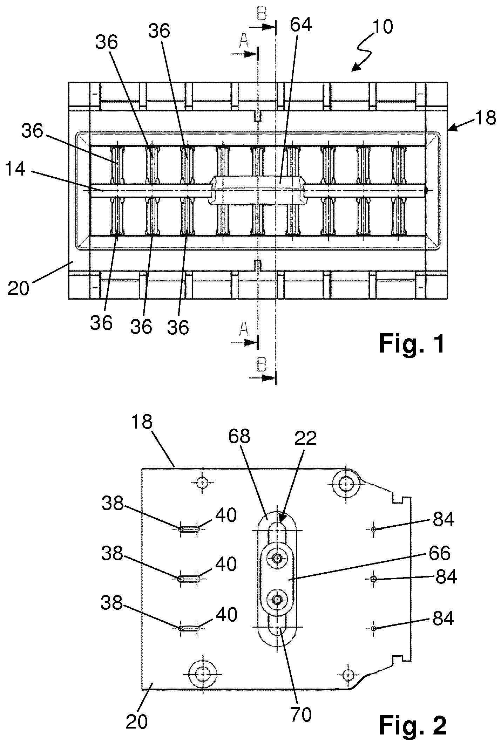

Fig. 1 zeigt eine schematische Vorderansicht auf einen Luftausströmer 10 in einer Neutralstellung. Der Luftausströmer 10 weist ein Gehäuse 18 auf. Das Gehäuse 18 weist in der in Fig. 1 dargestellten Ansicht Rippen auf, die nicht bezeichnet und nicht erforderlich für die Funktion des Luftausströmers 10 sind. Die Darstellung von Fig. 1 zeigt die Ansicht auf den Luftaustrittsbereich 26 (in Fig. 1 nicht bezeichnet). In dem Gehäuse 18 sind Luftleitelemente 12, 14 und 16 angeordnet, wobei die Luftleitelemente 12 und 16 in Fig. 1 nicht sichtbar sind. Ferner umfasst der Luftausströmer 10 zwischen den Luftleitelementen 12, 14 und 16 angeordnete Lamellen 36. Die Luftleitelemente 12, 14 und 16 sind verschwenkbar und abschnittsweise verlagerbar bzw. geführt mit den gegenüberliegenden Seitenwänden 20 verbunden. Die Lamellen 36 sind zwischen zweiten Abschnitten 32 der Luftleitelemente 12, 14 und 16 angeordnet. An dem Luftleitelement 14 ist ein Verstellmittel 64 angeordnet. Das Verstellmittel 64 dient zum Verschwenken der Luftleitelemente 12, 14 und 16 sowie der Lamellen 36. Der in den Figuren gezeigte Luftausströmer 10 kann zusätzlich mit einer Einrichtung zum Öffnen und Schließen eines Luftzuführkanals ausgebildet sein. Ferner kann der Luftausströmer 10 mit einer Blende oder einem Luftaustrittsgitter in einem Fahrzeug, beispielsweise in einem Armaturenbrett, angeordnet sein.

Fig. 2 zeigt eine Seitenansicht des Luftausströmers 10 von Fig. 1. Die gegenüberliegende Seitenwand ist entsprechend der in Fig. 2 gezeigten Seitenwand 20 ausgebildet. In den Seitenwänden 20 befinden sich Lager 84, in welchen Lagerstifte für die ersten Abschnitte 30 der Luftleitelemente 12, 14 und 16 aufgenommen sind. In dem mittleren Lager 84 sind die Enden einer Stange 76 aufgenommen. Die Stange 76 ist Teil eines Scharniers 54 für das mittlere Luftleitelement 14 mit dem Verstellmittel 64.

In den Seitenwänden 20 sind Führungskulissen 40 angeordnet, in welchen Lagerelemente 38 verschieblich und verschwenkbar aufgenommen sind. Die Lagerelemente 38 sind mit dritten Abschnitten 34 der Luftleitelemente 12, 14 und 16 verbunden. Ferner weisen die Seitenwände 20 oder zumindest eine der Seitenwände 20 ein Langloch 22 auf, das von einer Ausnehmung 68 umgeben ist. Ein Führungselement 66 ist innerhalb und entlang der Ausnehmung 68 verschiebbar und ist über das Langloch 22 mit einer dahinterliegenden, sich im Luftkanal 28 befindlichen Führungsplatte 70 verbunden.

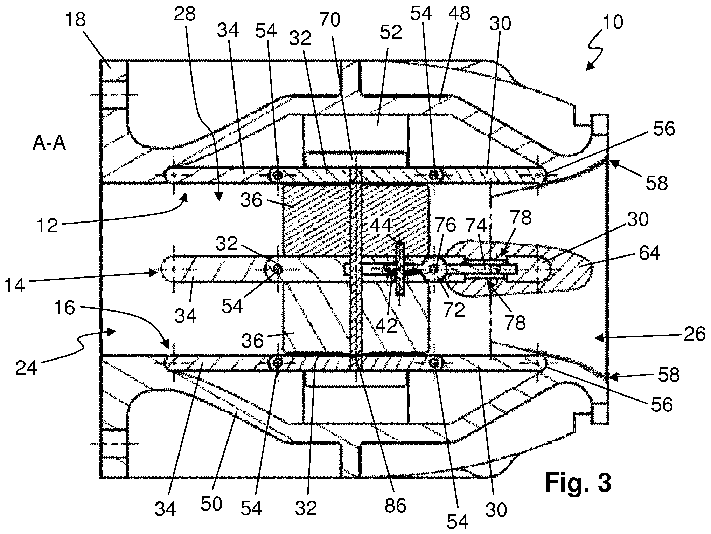

Fig. 3 zeigt einen Schnitt (A-A) durch den Luftausströmer 10 von Fig. 1. Die Luftleitelemente 12, 14 und 16 und die Lamellen 36 befinden sich hier in einer Neutralstellung. Die Luftleitelemente 12, 14 und 16 weisen jeweils einen ersten Abschnitt 30, einen zweiten Abschnitt 32 und einen dritten Abschnitt 34 auf. Die ersten Abschnitte 30 der Luftleitelemente 12 und 16 sind über ein Scharnier 54 mit den zweiten Abschnitten 32 und die zweiten Abschnitte 32 der Luftleitelemente 12 und 16 sind jeweils über ein Scharnier 54 mit den dritten Abschnitten 34 verbunden.

Der erste Abschnitt 30 des Luftleitelementes 14 weist gegenüber den ersten Abschnitten 30 der Luftleitelemente 12 und 16 eine andere Ausgestaltung im Bereich des Verstellmittels 64 auf. Ferner weist der zweite Abschnitt 32 des Luftleitelementes 14 eine andere Ausgestaltung als die zweiten Abschnitte 32 der Luftleitelemente 12 und 16 auf. Der dritte Abschnitt 34 des Luftleitelementes 14 weist eine Ausgestaltung entsprechend der dritten Abschnitte 34 der Luftleitelemente 12 und 16 auf, jedoch sind der erste Abschnitt 30, der zweite Abschnitt 32 und der dritte Abschnitt 34 des Luftleitelementes 14 dicker ausgeführt als die ersten Abschnitte 30, die zweiten Abschnitte 32 und die dritten Abschnitte 34 der Luftleitelemente 12 und 16. Der dritte Abschnitt 34 des Luftleitelementes 14 ist über ein Scharnier 54 mit dem zweiten Abschnitt 32 des Luftleitelementes 14 verbunden. Der zweite Abschnitt 32 des Luftleitelementes 14 ist über eine Stange 76, die als Scharnierstange dient, mit dem ersten Abschnitt 30 des Luftleitelementes 14 verbunden. Die ersten Abschnitte 30 der Luftleitelemente 12, 14 und 16 sind in ihren vorderen Abschnitten um die Lager 84 (siehe Fig. 2) verschwenkbar. Die dritten Abschnitte 34 der Luftleitelementes 12, 14 und 16 sind über die Lagerelemente 38 in Führungskulissen 40 verschieblich und verschwenkbar gelagert (siehe Fig. 2).

Die zweiten Abschnitte 32 der Luftleitelemente 12, 14 und 16 sind über eine Führungsplatte 70 miteinander verbunden. Ferner ist in Öffnungen der zweiten Abschnitte 32 der Luftleitelemente 12, 14 und 16 eine Lagerstange 86 aufgenommen. Die Lamellen 36 sind um die Lagerstange 86 verschwenkbar. Die Führungsplatte 70 ist in einer als Nut ausgebildeten Führung 52 verschieblich gelagert. Die beiden Lamellen 36 sind über einen Koppelstift 44 miteinander verbunden. Der zweite Abschnitt 32 des Luftleitelementes 14 weist Öffnungen 60 auf, in welchen der Koppelstift 44 verlagerbar ist. Der zweite Abschnitt 32 des Luftleitelementes 14 weist ferner eine Ausnehmung auf, in welcher eine Koppelstange 42 aufgenommen ist. Die Koppelstange 42 weist Öffnungen 46 auf, in denen jeweils Koppelstifte 44 aufgenommen sind, die eine obere Lamelle 36 mit einer unteren Lamelle 36 koppeln. Darüber hinaus umgreift ein erstes Verschiebeteil 72 den Koppelstift 44 von Fig. 3 zumindest abschnittsweise, wobei das erste Verschiebeteil 72 so ausgebildet ist, dass es entlang der Stange 76 verschoben werden kann. Ferner ist ein zweites Verschiebeteil 74 entlang der Stange 76 verlagerbar und umgreift das erste Verschiebeteil 72, so dass eine Verlagerung des zweiten Verschiebeteils 74 eine Verlagerung des ersten Verschiebeteils 72 und damit eine Verlagerung des Koppelstifts 44 bewirkt. Über die Koppelstange 42 sind damit sämtliche Lamellen 36 des Luftausströmers 10 gemeinsam verschwenkbar. Der erste Abschnitt 30 des Luftleitelementes 14 weist einen Freiraum auf, in dem das zweite Verschiebeteil 74 verschieblich parallel zur Längsachse der Stange 76 gelagert ist. Das zweite Verschiebeteil 74 ist über einen Durchbruch in dem ersten Abschnitt 30 mit dem Verstellmittel 64 verbunden. Das Verstellmittel 64 weist Vorsprünge 78 auf, die in Führungsausnehmungen 80 des ersten Abschnitts 30 des Luftleitelementes 14 aufgenommen sind. Das Verstellmittel 64 kann daher entlang der Führungsausnehmungen 80 parallel zur Längsachse der Stange 76 verschoben werden.

Das Gehäuse 18 weist einen Lufteintrittsbereich 24 auf. Von dem Lufteintrittsbereich 24 gelangt Luft in den Luftkanal 28 und wird über die Luftleitelemente 12, 14 und 16 sowie über die Lamellen 36 abgelenkt. Über den Luftaustrittsbereich 26 tritt die Luft aus. Die Luftaustrittskanten 58 sind abgerundet ausgebildet. Ebenso sind die Längskanten 56 der ersten Abschnitte 30 der Luftleitelemente 12, 14 und 16 abgerundet ausgebildet. Auch die dem Lufteintrittsbereich 24 zugewandten Längskanten der dritten Abschnitte 34 der Luftleitelemente 12, 14 und 16 sind abgerundet ausgebildet.

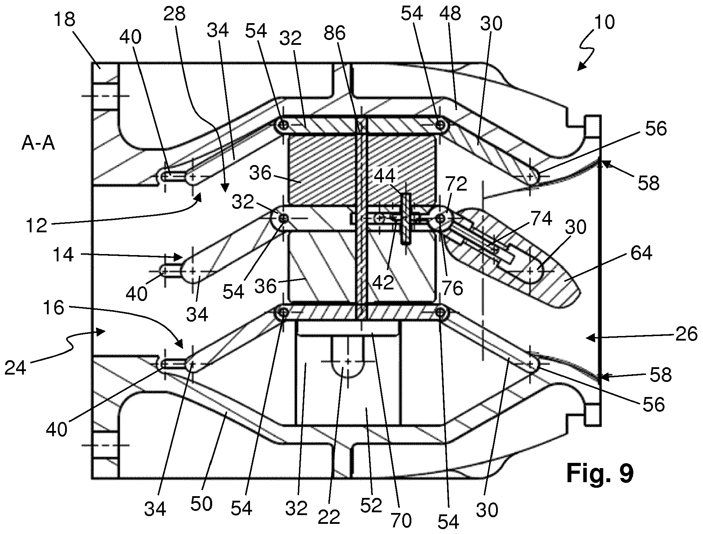

Die Seitenwände 48 und 50 des Gehäuses 18 sind so ausgebildet, dass in den maximal verschwenkten bzw. ausgelenkten Zuständen der Luftleitelementen 12, 14 und 16 die ersten Abschnitte 30, die zweiten Abschnitte 32 und die dritten Abschnitte 34 an den Seitenwänden 48 und 50 anliegen (siehe Fig. 9 10 und 15, 16).

Erfolgt eine Betätigung des Verstellmittels 64 nach oben oder unten, erfolgt ein Verschwenken des ersten Abschnitts 30 des Luftleitelementes 14 sowie der damit verbundenen Abschnitte 32 und 34 des Luftleitelementes 14 und über die Kopplung durch die Führungsplatte 70 und die Lagerstange 86 ein Verschwenken der ersten Abschnitte 30 der Luftleitelemente 12 und 16, eine Verlagerung der zweiten Abschnitte 32 der Luftleitelemente 12 und 16 und ein Verschwenken und eine Verlagerung der dritten Abschnitte der Luftleitelemente 12 und 16. Wird das Verstellmittel 64 in Zeichenrichtung hinein- oder hinausbewegt, erfolgt ein Verschwenken der Lamellen 36 über das erste Verschiebeteil 72, das zweite Verschiebeteil 74, die Koppelstange 42 und die Koppelstifte 44.

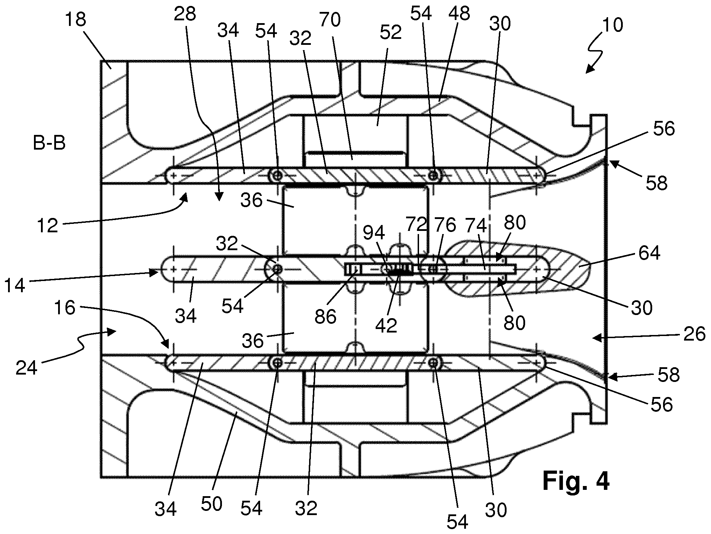

Fig. 4 zeigt einen weiteren Schnitt (B-B) durch den Luftausströmer 10 von Fig. 1. In Fig. 4 sind die Führungsausnehmungen 80 in dem ersten Abschnitt 30 des Luftleitelementes 14 dargestellt. Ferner ist ein Stift 94 dargestellt, der in einer Öffnung 90 in dem zweiten Abschnitt 32 des Luftleitelementes 14 aufgenommen ist. Der Stift 94 ist mit der Führungsplatte 70 verbunden. An der Führungsplatte 70 sind weitere Stifte 94 (in Fig. 4 nicht dargestellt) angeordnet, wobei für jeden zweiten Abschnitt 32 der Luftleitelemente 12, 14 und 16 jeweils zwei Stifte 94 vorgesehen sind. Die Stifte 94 greifen in eine durchgehende, längliche Öffnung 90 oder jeweils in eine eigene für sie vorgesehen Öffnung 90 entlang der Seitenflächen der zweiten Abschnitte 32 der Luftleitelemente 12, 14 und 16.

Wie den Fig. 3 und 4 zu entnehmen ist, ragen die Luftleitelemente 12 und 16 nicht in den Luftkanal 28 hinein und behindern damit auch nicht die durchströmende Luft. Lediglich das Luftleitelement 14 und die Lamellen 36 sind dem Luftstrom direkt ausgesetzt. Vorteilhafterweise ergibt sich jedoch bei dem Luftausströmer 10, der in den Figuren dargestellt ist, ein im Wesentlichen gleichbleibender Strömungsquerschnitt, unabhängig davon, ob die Luftleitelemente 12, 14 und 16 sich in ihrer Neutralstellung befinden oder nach oben und unten (siehe Fig. 9, 10 und 15, 16) ausgelenkt sind.

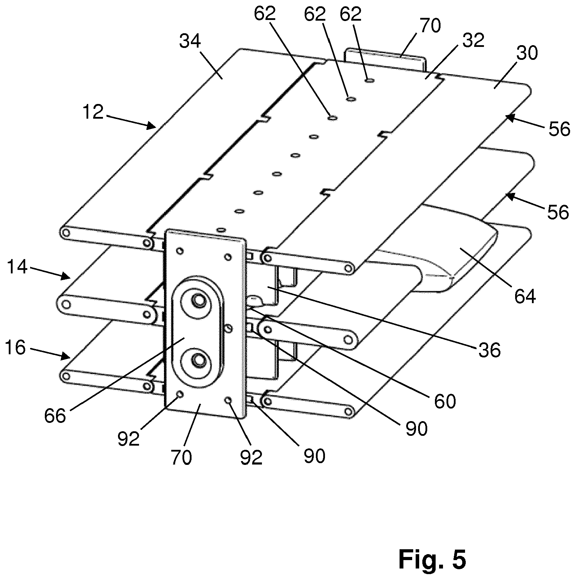

Fig. 5 zeigt eine perspektivische Darstellung von Komponenten des Luftausströmers 10 von Fig. 1 in schematischer Ansicht. Der zweite Abschnitt 32 des Luftleitelementes 12 weist Öffnungen 62 auf, in denen Lagerzapfen 82 der Lamellen 36 aufgenommen sind. Die Lamellen 36 sind um die Lagerzapfen 82 verschwenkbar in den Öffnungen 62 aufgenommen. Der zweite Abschnitt 32 des Luftleitelementes 16 weist auf der gegenüberliegenden Seite ebenfalls Öffnungen 62 auf, in denen Lagerzapfen 82 der unteren Lamellen 36 aufgenommen sind. Die Lamellen 36 sind über Koppelstifte 44 (in Fig. 5 nicht dargestellt) miteinander verbunden. Erste Enden der Stifte 94 sind in Öffnungen 92 der Führungsplatte 70 aufgenommen. Die zweiten Enden der Stifte 94 sind in Öffnungen 90 der zweiten Abschnitte 32 aufgenommen. Die zweiten Abschnitte 32 der Luftleitelemente 12, 14 und 16 sind über Scharniere mit den ersten Abschnitten 30 und den dritten Abschnitten 34 verbunden. Dazu können Stangen, wie die Stange 76, vorgesehen sein, die in entsprechenden Öffnungen in den Abschnitten 30, 32 und 34 aufgenommen sind. Alternativ können auch beispielsweise die zweiten Abschnitte 32 Stifte aufweisen, die in Öffnungen der ersten Abschnitte 30 und der dritten Abschnitte 34 eingreifen.

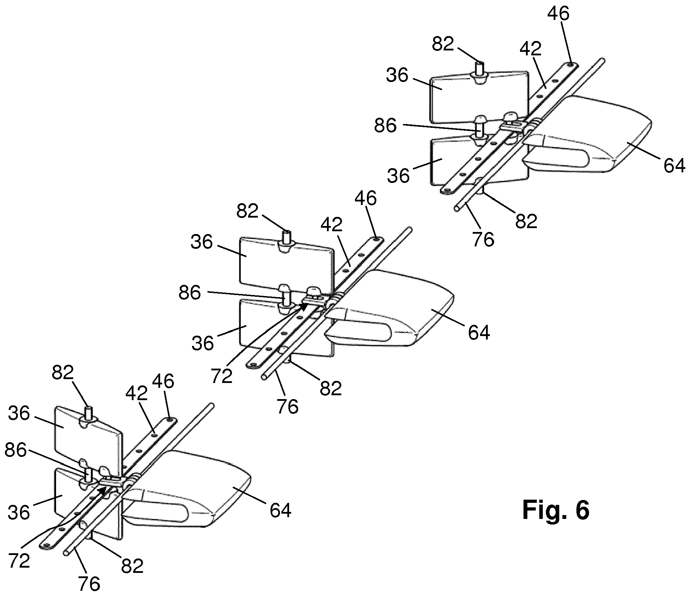

Fig. 6 zeigt weitere perspektivische Darstellungen von Komponenten des Luftausströmers 10 von Fig. 1 in schematischer Ansicht. Die mittlere Ansicht zeigt zwei Lamellen 36, die über eine Lagerstange 86 miteinander verbunden sind, sowie eine mit den Lamellen 36 über den Koppelstift 44 verbundene Koppelstange 42 mit Öffnungen 46 und die Stange 76 mit dem ersten Verschiebeteil 72, dem zweiten Verschiebeteil 74 und dem Verstellmittel 64. In der mittleren Darstellung befinden sich die Lamellen 36 und auch die nicht dargestellten Luftleitelemente 12, 14 und 16 in ihrer Neutralstellung und sind nicht verschwenkt. In der unteren, linken Ansicht von Fig. 6 ist das Verstellmittel 64 nach links verschoben worden, wobei über die Kopplung des Verstellmittels 64 mit dem zweiten Verschiebeteil 74, welches das erste Verschiebeteil 72 umgreift, ebenfalls das erste Verschiebeteil 72 nach links verschoben worden ist. Das erste Verschiebeteil 72 umgreift den Koppelstift 44, der in einer Öffnung 46 der Koppelstange 42 aufgenommen ist, und bewirkt auf Grund der Verlagerung des Verstellmittels 64 ein Verschwenken der Lamellen 36 um die Lagerzapfen 82 der Lagerstange 86.

In dem rechten oberen Bild von Fig. 6 ist das Verstellmittel 64 entgegengesetzt verschoben worden, so dass die Lamellen 36 ebenfalls entgegengesetzt zu der Darstellung unten links von Fig. 6 verschwenkt sind. In den weiteren Öffnungen 46 (in Fig. 6 nur eine bezeichnet) sind ebenfalls Koppelstifte 44 aufgenommen, die mit Lamellen 36 verbunden sind wobei diese Lamellen 36 ebenfalls über eine Lagerstange 86 und Lagerzapfen 82 verschwenkbar zwischen zweiten Abschnitten 32 gelagert sind.

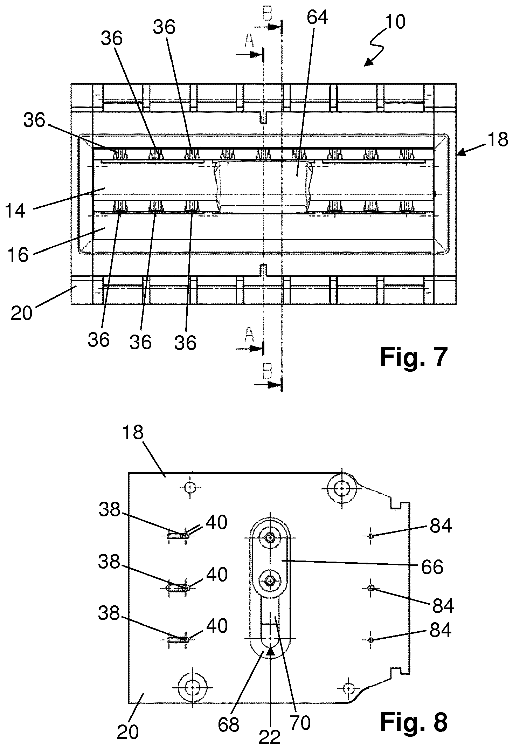

Fig. 7 zeigt eine schematische Vorderansicht auf den Luftausströmer 10 von Fig. 1 in einer verschwenkten Stellung. Hierbei ist das Verstellmittel 64 nach unten gedrückt worden, um den Luftstrom aus dem Luftausströmer 10 nach unten abzulenken.

Fig. 8 zeigt eine Seitenansicht des Luftausströmers 10 von Fig. 7. In der verschwenkten Ausrichtung der Luftleitelemente 12, 14 und 16 von Fig. 7 erfolgt eine Verlagerung der zweiten Abschnitte 32 der Luftleitelemente 12, 14 und 16 nach oben in Richtung der Seitenwand 48. Hierbei ist ebenfalls die Führungsplatte 70 nach oben verschoben und gleichfalls das damit gekoppelte Führungselement 66, welches an dem oberen Ende der Ausnehmung 68 angelangt ist. Bei der verschwenkten Ausrichtung der Luftleitelemente 12, 14 und 16 befinden sich die dritten Abschnitte 34 in einem verschwenkten und verschobenen Zustand, wobei die Lagerzapfen 38 der dritten Abschnitte 34 nach rechts in den Führungskulissen 40 verschoben sind.

Fig. 9 zeigt einen Schnitt (A-A) durch den Luftausströmer von Fig. 7. Wie einem Vergleich zwischen Fig. 3 und 9 entnommen werden kann, sind die Luftleitelemente 12, 14 und 16 verschwenkt bzw. verlagert, wobei die ersten Abschnitte 30 verschwenkt sind, die zweiten Abschnitte 32 verlagert und entsprechend der Verlagerung der ersten Abschnitte 30 nach rechts verschoben und die dritten Abschnitte 34 sowohl verschwenkt als auch nach rechts verschoben sind. Einem Vergleich der Fig. 3 und 9 ist ferner zu entnehmen, dass der Strömungsquerschnitt des Luftkanals 28 von Fig. 3 im Wesentlichen gleich dem Strömungsquerschnitt des Luftkanals 28 von Fig. 9 ist. Um eine Verwirbelung der in den Lufteintrittsbereich 24 einströmenden Luft weiter zu minimieren, sind die Abschnitte des Gehäuses 18, an welchem die Bereiche der dritten Abschnitte 34 mit den Lagerelementen 38 in der Neutralstellung anliegen, so ausgebildet, dass die Luft nicht zu den Führungskulissen 40 der Lagerelemente 38 für die Luftleitelemente 12 und 16 geführt wird.

Die zweiten Abschnitte 32 der Luftleitelemente 12, 14 und 16 sind nach rechts verschoben, wobei die parallele Ausrichtung der zweiten Abschnitte 32 zueinander über die Stifte 94 an der Führungsplatte 70 und den Öffnungen 90 an den Seitenflächen der zweiten Abschnitte 32 realisiert wird.

Die Ausgestaltung des ersten Verschiebeteils 72 und des zweiten Verschiebeteils 74, die miteinander gekoppelt und entlang der Stange 76 verschiebbar sind, ermöglicht auch bei einem verschwenkten Abschnitt 30 des Luftleitelementes 12 ein Verschwenken der Lamellen 36 über das Verstellmittel 64.

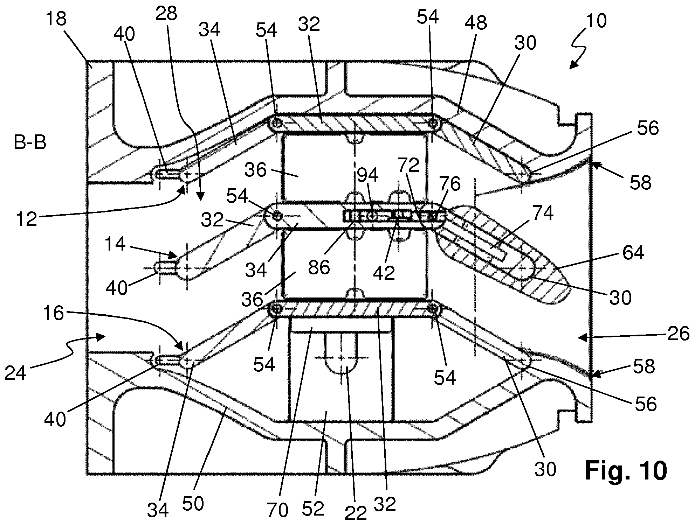

Fig. 10 zeigt einen weiteren Schnitt (B-B) durch den Luftausströmer 10 von Fig. 7.

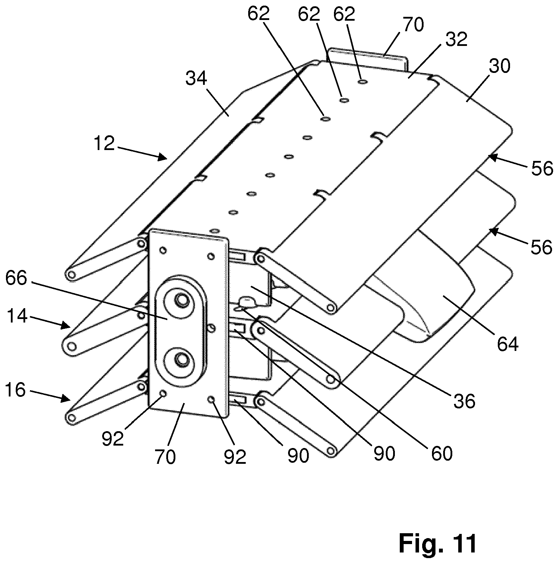

Fig. 11 zeigt eine perspektivische Darstellung von Komponenten des Luftausströmers 10 von Fig. 7 in schematischer Ansicht. Fig. 11 kann im Vergleich mit Fig. 5 entnommen werden, dass die zweiten Abschnitte 32 nach rechts in Bezug auf die in der Führung 52 aufgenommene Führungsplatte 70 verschoben sind. Dies wird über die in den Öffnungen 90 aufgenommenen Stifte 94 der Führungsplatte 70 erreicht. Die Öffnungen 90 in den zweiten Abschnitten 32 sind in der hier gezeigten Ausführung als Langlöcher ausgebildet.

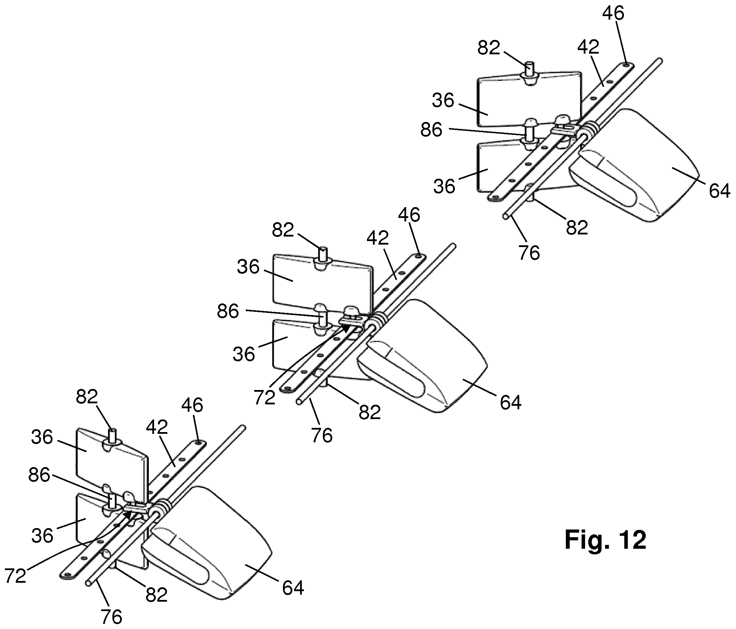

Fig. 12 zeigt weitere perspektivische Darstellungen von Komponenten des Luftausströmers 10 von Fig. 7 in schematischer Ansicht. Im Gegensatz zu den in Fig. 6 dargestellten Ansichten sind das Verstellmittel 64 und damit die ersten Abschnitte 30 der Luftleitelemente 12, 14 und 16 nach unten verschwenkt. Die Ausrichtung des ersten Verschiebeteils 72 ändert sich jedoch auf Grund der Lagerung an der Stange 76 nicht.

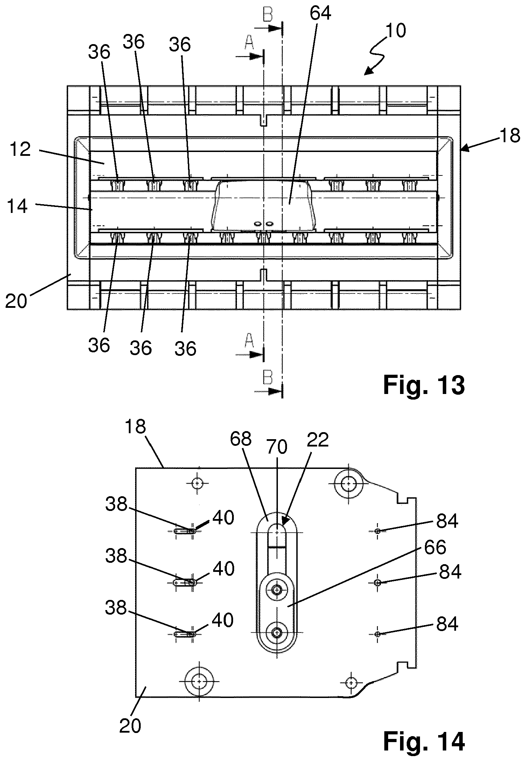

Fig. 13 zeigt eine schematische Vorderansicht auf den Luftausströmer 10 von Fig. 1 in einer weiteren verschwenkten Stellung. In Fig. 13 sind die Luftleitelemente 12, 14 und 16 derart ausgerichtet, dass ein aus dem Luftaustrittsbereich 26 austretender Luftstrom nach oben abgelenkt wird.

Fig. 14 zeigt eine Seitenansicht des Luftausströmers 10 von Fig. 13. Die Lagerelemente 38 sind in den Führungskulissen 40 nach rechts verschoben, da die zweiten Abschnitte 32 nach unten verlagert und verschoben sind. In der in Fig. 13 gezeigten Stellung befindet sich das Führungselement 66 in seiner unteren Endstellung in der Ausnehmung 68.

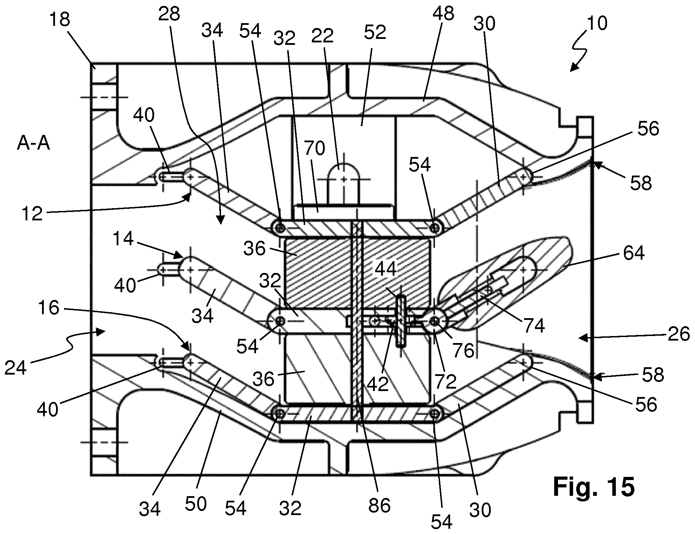

Fig. 15 zeigt einen Schnitt (A-A) durch den Luftausströmer 10 von Fig. 13. Wie einem Vergleich der Fig. 3, 9 und 15 entnommen werden kann, entsprechen die Strömungsquerschnitte der Fig. 3 und 9 im Wesentlichen dem Strömungsquerschnitt des Luftkanals 28 von Fig. 15. Die ersten Abschnitte 30 der Luftleitelemente 12, 14 und 16 sind um Lagerzapfen im Bereich der vorderen Längskanten 56 nach unten verschwenkt. Über die Kopplung der ersten Abschnitte 30 mit den zweiten Abschnitten 32 über die Scharniere 54 und die Stange 76, die Teil eines Scharniers ist, sind die zweiten Abschnitte 32 der Luftleitelemente 12, 14 und 16 nach unten verlagert und nach rechts verschoben. Ferner sind über die Kopplung der zweiten Abschnitte 32 mit den dritten Abschnitten 34 die dritten Abschnitte 34 der Luftleitelemente 12, 14 und 16 nach unten verschwenkt und nach rechts verlagert.

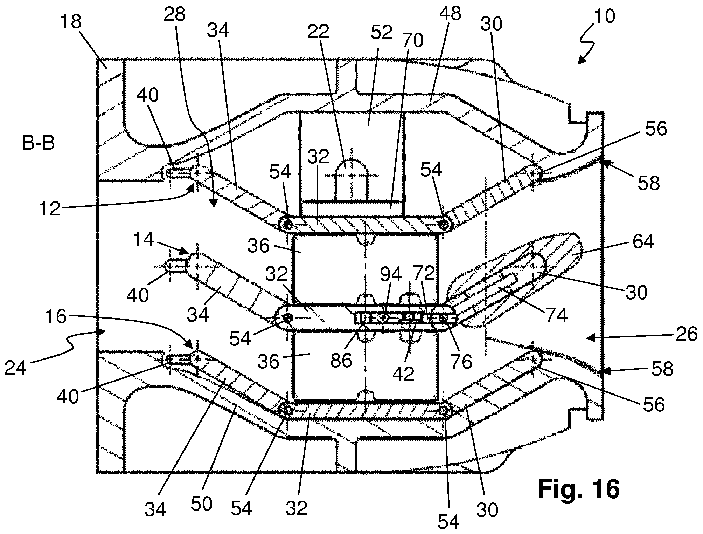

Fig. 16 zeigt einen weiteren Schnitt (B-B) durch den Luftausströmer 10 von Fig. 13.

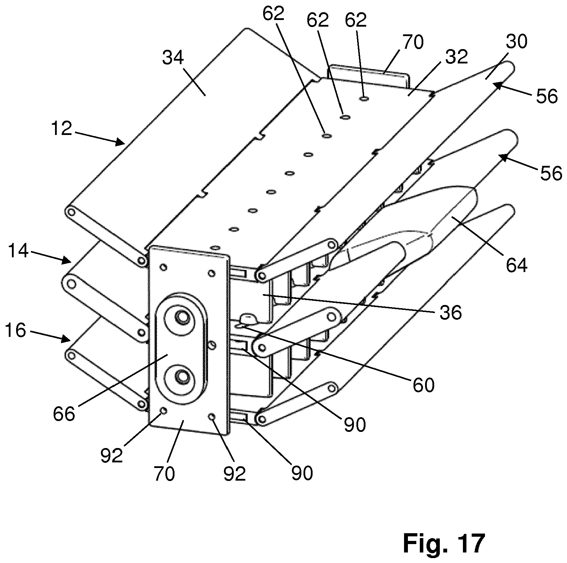

Fig. 17 zeigt eine perspektivische Darstellung von Komponenten des Luftausströmers 10 von Fig. 13 in schematischer Ansicht. Die zweiten Abschnitte 32 der Luftleitelemente 12, 14 und 16 sind in Bezug auf die in den Führungen 52 der gegenüberliegenden Seitenwände gelagerten Führungsplatten 70 nach rechts verschoben.

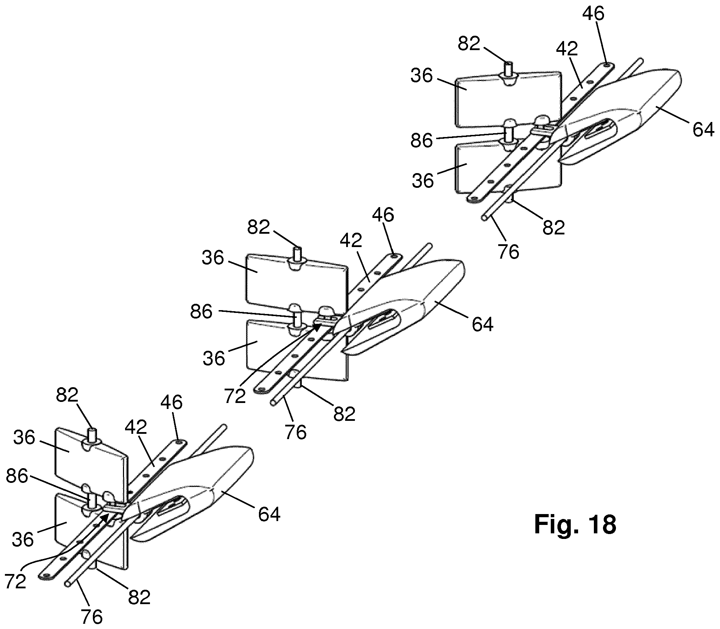

Fig. 18 zeigt weitere perspektivische Darstellungen von Komponenten des Luftausströmers 10 von Fig. 13 in schematischer Ansicht. Anders als in den Fig. 6 und 12 dargestellt, sind die ersten Abschnitte 30 der Luftleitelemente 12, 14 und 16 nach oben verschwenkt. Auf Grund der Ausbildung des ersten Verschiebeteils 72, des zweiten Verschiebeteils 74 und deren Lagerung auf der Stange 76 wird auch in einer solchen verschwenkten Stellung der ersten Abschnitte 30 das erste Verschiebeteil 72 in seiner Ausrichtung gehalten und die Funktionalität des Verstellens der Lamellen 36 aufrechterhalten.

Bei dem hierin beschriebenen Luftausströmer 10 erfolgt eine optimale Luftablenkung in Bezug auf Abweichungen und akustische Eigenschaften und es treten nur geringe Druckverluste auf, was sich im Hinblick auf Störgeräusche positiv auswirkt, da diese minimiert werden. Bei dem Luftausströmer 10 gibt es keine scharfen "Prallkanten" für die durch- und ausströmende Luft. Der Luftausströmer 10 weist einen im Wesentlichen gleichbleibenden Luftkanalquerschnitt auf, was im Hinblick auf die gewünschte Luftausströmung besonders bevorzugt ist.

### Bezugszeichenliste

- 10: Luftausströmer
- 12: Luftleitelement
- 14: Luftleitelement
- 16: Luftleitelement
- 18: Gehäuse
- 20: Seitenwand
- 22: Langloch
- 24: Lufteintrittsbereich
- 26: Luftaustrittsbereich
- 28: Luftkanal
- 30: erster Abschnitt
- 32: zweiter Abschnitt
- 34: dritter Abschnitt
- 36: Lamelle
- 38: Lagerelement
- 40: Führungskulisse
- 42: Koppelstange
- 44: Koppelstift
- 46: Öffnung
- 48: Seitenwand
- 50: Seitenwand
- 52: Führung
- 54: Scharnier
- 56: Längskante
- 58: Luftaustrittskante
- 60: Öffnung
- 62: Öffnung
- 64: Verstellmittel
- 66: Führungselement
- 68: Ausnehmung
- 70: Führungsplatte
- 72: erstes Verschiebeteil
- 74: zweites Verschiebeteil
- 76: Stange
- 78: Vorsprung
- 80: Führungsausnehmung
- 82: Lagerzapfen
- 84: Lager
- 86: Lagerstange
- 90: Öffnung
- 92: Öffnung
- 94: Stift

## Patentansprüche

1. Luftausströmer aufweisend mindestens zwei im Wesentlichen parallel zueinander angeordnete Luftleitelemente (12; 14; 16), rechtwinklig zu den Luftleitelementen (12; 14; 16) angeordnete verschwenkbare Lamellen (36) und ein Gehäuse (18) mit einem Lufteintrittsbereich (24), einem Luftaustrittsbereich (26) und einem zwischen dem Lufteintrittsbereich (24) und dem Luftaustrittsbereich (26) angeordneten Luftkanal (28) **dadurch gekennzeichnet, dass** die mindestens zwei Luftleitelemente (12; 14; 16) einen ersten Abschnitt (30), einen zweiten Abschnitt (32) und einen dritten Abschnitt (34) aufweisen und die Abschnitte (30, 32, 34) miteinander verschwenkbar verbunden sind, wobei die ersten Abschnitte (30) der mindestens zwei Luftleitelemente (12; 14; 16) im Luftaustrittsbereich (26) mindestens verschwenkbar mit dem Gehäuse (18) verbunden sind und die dritten Abschnitte (34) im Luftkanal (28) verschwenkbar und verlagerbar mit dem Gehäuse (18) verbunden sind und die Lamellen (36) zwischen den zweiten Abschnitten (32) angeordnet sind.

2. Luftausströmer nach Anspruch 1, wobei die dritten Abschnitte (34) Lagerelemente (38) aufweisen, die in Führungskulissen (40) an gegenüberliegenden Seitenwänden des Gehäuses (18) im Luftkanal (28) beweglich gelagert sind.

3. Luftausströmer nach Anspruch 1 oder 2, wobei die Lamellen (36) über eine Koppeleinrichtung miteinander verbunden sind.

4. Luftausströmer nach einem der Ansprüche 1 bis 3, wobei die den ersten Abschnitten (30), den zweiten Abschnitten (32) und den dritten Abschnitten (34) zugewandten Seitenwände (48, 50) des Gehäuses (18) Bereiche aufweisen, die so ausgebildet sind, dass die ersten Abschnitte (30), die zweiten Abschnitte (32) und die dritten Abschnitte (34) in ihren maximalen Schwenkstellungen parallel zu den Bereichen der Seitenwände (48, 50) verlaufen.

5. Luftausströmer nach einem der Ansprüche 1 bis 4, wobei die zweiten Abschnitte (32) an gegenüberliegenden Seitenwänden des Gehäuses (18) im Luftkanal (28) in Luftströmungsrichtung oder quer hierzu verlaufend geführt sind, wobei bei dieser Ausgestaltung die ersten Abschnitte (30) ebenfalls verlagerbar und verschwenkbar im Gehäuse gelagert sind.

6. Luftausströmer nach einem der Ansprüche 1 bis 5, wobei die zweiten Abschnitte (32) der Luftleitelemente (12; 14; 16) miteinander verbunden sind.

7. Luftausströmer nach einem der Ansprüche 1 bis 6, wobei die zweiten Abschnitte (32) der Luftleitelemente (12; 14; 16) einstückig ausgebildet sind.

8. Luftausströmer nach einem der Ansprüche 1 bis 7, wobei die ersten Abschnitte (30) mit den zweiten Abschnitten (32) und die zweiten Abschnitte (32) mit den dritten Abschnitten (34) über Scharniere (54) miteinander verbunden sind.

9. Luftausströmer nach einem der Ansprüche 1 bis 8, wobei die ersten Abschnitte (30) der Luftleitelemente (12; 14; 16) an ihrer dem Luftaustrittsbereich (26) zugewandten Längskante (56) verschwenkbar mit dem Gehäuse (18) verbunden sind und/oder die dem Lufteintrittsbereich (24) und/oder dem Luftaustrittsbereich (26) zugewandten Längskanten (56) der Luftleitelemente (12; 14; 16) abgerundet ausgebildet sind und/oder das Gehäuse (18) eine den Luftaustrittsbereich (26) umgebende Blende aufweist.

10. Luftausströmer nach einem der Ansprüche 1 bis 9, wobei die dem Luftaustrittsbereich (26) zugewandten Längskanten (56) der ersten Abschnitte (30) der Luftleitelemente (12; 14; 16) hinter einer Luftaustrittskante (58) einer Blende und/oder des Luftaustrittsbereichs (26) angeordnet sind und/oder die Luftaustrittskante (58) einer Blende und/oder des Luftaustrittsbereichs (26) abgerundet ausgebildet ist.

11. Luftausströmer nach einem der Ansprüche 1 bis 10, wobei der Luftausströmer (10) mindestens drei Luftleitelemente (12, 14, 16) aufweist und zwischen den zweiten Abschnitten (32) der Luftleitelemente (12, 14, 16) jeweils eine Gruppe von Lamellen (36) angeordnet ist, wobei die Lamellen (36) der jeweiligen Gruppe und die Gruppen der Lamellen (36) miteinander gekoppelt sind.

12. Luftausströmer nach einem der Ansprüche 1 bis 11, wobei der Luftausströmer (10) mindestens drei Luftleitelemente (12, 14, 16) aufweist und in dem mindestens einen mittleren zweiten Abschnitt (32) eine Koppelstange (42) mit Öffnungen (46) aufgenommen ist, wobei in den Öffnungen (46) Koppelstifte (44) zum Koppeln der über und unter des mindestens einen zweiten Abschnitts (32) angeordneten Lamellen (36) gelagert sind, wobei der mindestens eine zweite Abschnitt (32) korrespondierende Öffnungen (60) für die Koppelstifte (44) aufweist.

13. Luftausströmer nach einem der Ansprüche 1 bis 12, wobei das Gehäuse (18) einen im Wesentlichen rechteckigen Querschnitt aufweist und die ersten Abschnitte (30), die zweiten Abschnitte (32) und die dritten Abschnitte (34) der Luftleitelemente (12, 14, 16) im Wesentlichen rechteckig ausgebildet sind.

14. Luftausströmer nach einem der Ansprüche 1 bis 13, wobei an dem ersten Abschnitt (30) eines Luftleitelements (12, 14, 16) an der dem Luftaustrittsbereich (26) zugewandten Längskante (58) ein Verstellmittel (64) angeordnet ist, welches parallel zur Längskante (58) verschiebbar gelagert und mit mindestens einer Lamelle (36) gekoppelt ist und/oder ein erstes Verschiebeteil (72) einen Koppelstift (44) innerhalb des zweiten Abschnitts (32) mindestens abschnittsweise umgreift und das erste Verschiebeteil (72) mit dem Verstellmittel (64) verbunden ist und/oder das erste Verschiebeteil (64) entlang einer Stange (76) verschieblich gelagert ist, welche Teil eines Scharniers zwischen dem zweiten Abschnitt (32) und dem ersten Abschnitt (30) mit dem Verstellmittel (64) ist, wobei das erste Verschiebeteil (72) mit einem zweiten Verschiebeteil (74) gekoppelt ist, welches innerhalb des ersten Abschnitts (30) mit dem Verstellmittel (64) geführt und mit dem Verstellmittel (64) verbunden ist.

15. Luftausströmer nach einem der Ansprüche 1 bis 14 wobei die Luftleitelemente mindestens einen vierten Abschnitt aufweisen, der zwischen dem zweiten Abschnitt und dem dritten Abschnitt verschwenkbar mit diesen verbunden ist und/oder der mindestens eine vierte Abschnitt in dem Gehäuse geführt und/oder verschwenkbar gelagert ist.

## Claims

1. Air vent comprising at least two air guide elements (12; 14; 16) arranged substantially parallel to one another, pivotable slats (36) arranged at right angles to the air guide elements (12; 14; 16) and a housing (18) with an air inlet region (24), an air outlet region (26) and an air channel (28) arranged between the air inlet region (24) and the air outlet region (26), **characterised in that** the at least two air guide elements (12; 14; 16) have a first section (30), a second section (32) and a third section (34) and the sections (30, 32, 34) are pivotably connected together, wherein the first sections (30) of the at least two air guide elements (12; 14; 16) are connected in the air outlet region (26) at least pivotably with the housing (18) and the third sections (34) are connected in the air channel (28) pivotably and displaceably with the housing (18) and the slats (36) are arranged in between the two sections (32).

2. Air vent according to claim 1, wherein the third sections (34) comprise bearing elements (38) which are movably mounted in the air channel (28) in gate guides (40) at opposite side walls of the housing (18).

3. Air vent according to claim 1 or 2, wherein the slats (36) are connected together by way of a coupling device.

4. Air vent according to any one of claims 1 to 3, wherein the side walls (48, 50), which face the first sections (30), the second sections (32) and the third sections (34), of the housing (18) have regions which are constructed so that the first sections (30), second sections (32) and third sections (34) in the maximum pivot settings thereof extend parallel to the regions of the side walls (48, 50).

5. Air vent according to any one of claims 1 to 4, wherein the second sections (32) are guided at opposite side walls of the housing (18) to extend in the air channel (28) in the air flow direction or transversely thereto, wherein in this configuration the first sections (30) are similarly mounted in the housing to be displaceable and pivotable.

6. Air vent according to any one of claims 1 to 5, wherein the second sections (32) of the air guide elements (12; 14; 16) are connected together.

7. Air vent according to any one of claims 1 to 6, wherein the second sections (32) of the air guide elements (12; 14; 16) are of integral construction.

8. Air vent according to any one of claims 1 to 7, wherein the first sections (30) are connected with the second sections (32), and the second sections (32) with the third sections (34), by way of hinges (54).

9. Air vent according to any one of claims 1 to 8, wherein the first sections (30) of the air guide elements (12; 14; 16) are pivotably connected at the longitudinal edge (56) thereof, which faces the air outlet region (26), with the housing (18), and/or the longitudinal edges (56), which face the air inlet region (24) and/or the air outlet region (26), of the air guide elements (12; 14; 16) are formed to be rounded, and/or the housing (18) has a screen surrounding the air outlet region (26).

10. Air vent according to any one of claims 1 to 9, wherein the longitudinal edges (56), which face the air outlet region (26), of the first sections (30) of the air guide elements (12; 14; 16) are arranged behind an air outlet edge (58) of a screen and/or of the air outlet region (26), and/or the air outlet edge (58) of a screen and/or of the air outlet region (26) is formed to be rounded.

11. Air vent according to any one of claims 1 to 10, wherein the air vent (10) comprises at least three air guide elements (12, 14, 16) and a respective group of slats (36) is arranged between the second sections (32) of the air guide elements (12, 14, 16), wherein the slats (36) of the respective group and the groups of slats (36) are coupled together.

12. Air vent according to any one of claims 1 to 11, wherein the air vent (10) comprises at least three air guide elements (12, 14, 16) and a coupling rod (42) with openings (46) is received in the at least one middle, second section (32), wherein coupling pins (44) for coupling the slats (36) arranged above and below the at least one second section (32) are mounted in the openings (46), wherein the at least one second section (32) has corresponding openings (60) for the coupling pins (44).

13. Air vent according to any one of claims 1 to 12, wherein the housing (18) has a substantially rectangular cross-section and the first sections (30), second sections (32) and third sections (34) of the air guide elements (12, 14, 16) are of substantially rectangular construction.

14. Air vent according to any one of claims 1 to 13, wherein an adjusting means (64) is arranged at the first section (30) of an air guide element (12, 14, 16) at the longitudinal edge (58) facing the air outlet region (26), which adjusting means is mounted to be displaceable parallel to the longitudinal edge (58) and is coupled with at least one slat (36) and/or a first displacing part (72) engages around a coupling pin (44) within the second section (32) at least in a region and the first displacing part (72) is connected with the adjusting means (64) and/or the first displacing part (72) is mounted to be displaceable along a rod (76), which is part of a hinge between the second section (32) and the first section (30) with the adjusting means (64), wherein the first displacing part (72) is coupled with a second displacing part (74) which is guided within the first section (30) with the adjusting means (64) and is connected with the displacing means (64).

15. Air vent according to any one of claims 1 to 14, wherein the air guide elements comprise at least one fourth section, which between the first section and the third section is pivotably connected with these and/or the at least one fourth section is guided and/or pivotably mounted in the housing.

## Revendications

1. Diffuseur d'air comprenant au moins deux éléments de guidage d'air (12 ; 14 ; 16) agencés sensiblement parallèlement l'un à l'autre, des lamelles (36) pivotantes agencées perpendiculairement aux éléments de guidage d'air (12 ; 14 ; 16) et un boîtier (18) présentant une zone d'entrée d'air (24), une zone de sortie d'air (26) et un canal d'air (28) agencé entre la zone d'entrée d'air (24) et la zone de sortie d'air (26), **caractérisé en ce que** lesdits au moins deux éléments de guidage d'air (12 ; 14 ; 16) présentent une première section (30), une deuxième section (32) et une troisième section (34) et les sections (30, 32, 34) sont reliées de manière pivotante les unes aux autres, dans lequel les premières sections (30) desdits au moins deux éléments de guidage d'air (12 ; 14 ; 16) dans la zone de sortie d'air (26) sont reliées au moins de manière pivotante au boîtier (18) et les troisièmes sections (34) sont reliées au boîtier (18) de manière pivotante et de façon mobile dans le canal d'air (28) et les lamelles (36) sont agencées entre les deuxièmes sections (32).

2. Diffuseur d'air selon la revendication 1, dans lequel les troisièmes sections (34) comprennent des éléments de support (38), qui sont montés mobiles dans le canal d'air (28) dans des coulisses de guidage (40) sur les parois latérales opposées du boîtier (18).

3. Diffuseur d'air selon la revendication 1 ou 2, dans lequel les lamelles (36) sont reliées les unes aux autres par un dispositif de couplage.

4. Diffuseur d'air selon l'une quelconque des revendications 1 à 3, dans lequel les parois latérales (48, 50) du boîtier (18) tournées vers les premières sections (30), les deuxièmes sections (32) et les troisièmes sections (34) présentent des zones qui sont conçues de sorte que les premières sections (30), les deuxièmes sections (32) et les troisièmes sections (34) s'étendent dans leurs positions pivotantes maximales parallèlement aux zones des parois latérales (48, 50).

5. Diffuseur d'air selon l'une quelconque des revendications 1 à 4, dans lequel les deuxièmes sections (32) sont guidées sur les parois latérales opposées du boîtier (18) dans le canal d'air (28) dans le sens d'écoulement de l'air ou en s'étendant transversalement à celui-ci, dans lequel les premières sections (30), dans ce mode de réalisation, sont également montées dans le boîtier de manière mobile et pivotante.

6. Diffuseur d'air selon l'une quelconque des revendications 1 à 5, dans lequel les deuxièmes sections (32) des éléments de guidage d'air (12 ; 14 ; 16) sont reliées les unes aux autres.

7. Diffuseur d'air selon l'une quelconque des revendications 1 à 6, dans lequel les deuxièmes sections (32) des éléments de guidage d'air (12 ; 14 ; 16) sont réalisées d'une seule pièce.

8. Diffuseur d'air selon l'une quelconque des revendications 1 à 7, dans lequel les premières sections (30) sont reliées aux deuxièmes sections (32) et les deuxièmes sections (32) sont reliées aux troisièmes sections (34) les unes avec les autres par des charnières (54).

9. Diffuseur d'air selon l'une quelconque des revendications 1 à 8, dans lequel les premières sections (30) des éléments de guidage d'air (12 ; 14 ; 16) sont reliées de manière pivotante au boîtier (18) au niveau de leur bord longitudinal (56) tourné vers la zone de sortie d'air (26) et/ou les bords longitudinaux (56) des éléments de guidage d'air (12 ; 14 ; 16) tournés vers la zone d'entrée d'air (24) et/ou la zone de sortie d'air (26) sont arrondis et/ou le boîtier (18) présente un cache entourant la zone de sortie d'air (26).

10. Diffuseur d'air selon l'une quelconque des revendications 1 à 9, dans lequel les bords longitudinaux (56), tournés vers la zone de sortie d'air (26) des premières sections (30) des éléments de guidage d'air (12 ; 14 ; 16) sont agencés derrière un bord de sortie d'air (58) d'un cache et/ou de la zone de sortie d'air (26) et/ou le bord de sortie d'air (58) d'un cache et/ou de la zone de sortie d'air (26) sont arrondis.

11. Diffuseur d'air selon l'une quelconque des revendications 1 à 10, dans lequel le diffuseur d'air (10) comprend au moins trois éléments de guidage d'air (12, 14, 16) et dans chaque cas un groupe de lamelles (36) est agencé entre les deuxièmes sections (32) des éléments de guidage d'air (12, 14, 16), dans lequel les lamelles (36) du groupe respectif et les groupes des lamelles (36) sont couplés les uns aux autres.

12. Diffuseur d'air selon l'une quelconque des revendications 1 à 11, dans lequel le diffuseur d'air (10) comprend au moins trois éléments de guidage d'air (12, 14, 16) et une bielle (42) présentant des ouvertures (46) est montée dans lesdites au moins une deuxième section centrale (32),dans lequel des tiges de couplage (44) permettant le couplage des lamelles (36) agencées au-dessus et au-dessous desdites au moins une deuxième section (32) sont montées dans les ouvertures (46), dans lequel lesdites au moins une deuxième section (32) présente des ouvertures (60) correspondantes pour les tiges de couplage (44).

13. Diffuseur d'air selon l'une quelconque des revendications 1 à 12, dans lequel le boîtier (18) présente une section transversale sensiblement rectangulaire et les premières sections (30), les deuxièmes sections (32) et les troisièmes sections (34) des éléments de guidage d'air (12, 14, 16) sont sensiblement rectangulaires.

14. Diffuseur d'air selon l'une quelconque des revendications 1 à 13, dans lequel un moyen de déplacement (64), lequel est monté mobile parallèlement au bord longitudinal (58) et est couplé à au moins une lamelle (36), est agencé sur la première section (30) d'un élément de guidage d'air (12, 14, 16) sur le bord longitudinal (58) tourné vers la zone de sortie d'air (26), et/ou une première pièce coulissante (72) entoure au moins partiellement une tige de couplage (44) à l'intérieur de la deuxième section (32) et la première pièce coulissante (72) est reliée au moyen de déplacement (64) et/ou la première pièce coulissante (64) est montée mobile le long d'une barre (76), laquelle fait partie d'une charnière entre la deuxième section (32) et la première section (30) avec le moyen de déplacement (64), dans lequel la première pièce coulissante (72) est couplée à une deuxième pièce coulissante (74), laquelle est guidée à l'intérieur de la première section (30) à l'aide du moyen de déplacement (64) et est reliée au moyen de déplacement (64).

15. Diffuseur d'air selon l'une quelconque des revendications 1 à 14, dans lequel les éléments de guidage d'air comprennent au moins une quatrième section qui est reliée entre la deuxième section et la troisième section de manière pivotante à celles-ci et/ou lesdites au moins une quatrième section est guidée dans le boîtier et/ou montée de manière pivotante.
